# EUROPEAN PATENT SPECIFICATION

(11) **EP 3 566 589 B1**
(45) Date of publication and mention of the grant of the patent: **11.12.2024**
(21) Application number: 18736605.9
(22) Date of filing: 09.01.2018
(51) Int. Cl.: A23L 23/00, A23L 27/10, A23L 13/70, A23L 13/72, A23L 5/10, A23L 3/005, A23L 3/3454, A23L 13/30, A23L 27/26

(54) **METHOD FOR PRODUCING MEAT BROTH COMPOSITION**
VERFAHREN ZUR HERSTELLUNG EINER FLEISCHBRÜHEZUSAMMENSETZUNG
PROCÉDÉ DE PRODUCTION D'UNE COMPOSITION DE BOUILLON DE VIANDE

(30) Priority: 09.01.2017 KR 20170002788
(43) Date of publication of application: 13.11.2019
(73) Proprietor: CJ Cheiljedang Corporation, Seoul 04560 (KR)
(72) Inventor: CHO, Won Il, Seoul 08018 (KR); KIM, Moo Nyun, Seoul 04998 (KR); YOON, Sang Eun, Cheongju-si Chungcheongbuk-do 28408 (KR); YOON, In Duck, Gwangmyeong-si Gyeonggi-do 14333 (KR); LEE, Nam Ju, Seoul 06592 (KR); KANG, Dae Ik, Goyang-si Gyeonggi-do 10387 (KR); KIM, Tae Hyeong, Suwon-si Gyeonggi-do 16325 (KR)
(74) Representative: Reddie & Grose LLP
(86) International application number: PCT/KR2018/000445
(87) International publication number: WO 2018/128531

(56) References cited:
- CN-A- 105 455 086
- JP-A- 2006 158 385
- KR-A- 20050 105 876
- KR-A- 20050 105 876
- KR-A- 20100 056 674
- KR-A- 20110 082 849
- KR-A- 20150 142 535
- KR-A- 20160 109 476
- KR-A- 20160 109 476
- KR-A- 20170 030 868
- US-A1- 2003 101 875
- KWON Y-S ET AL: "Antimicrobial constituents of Angelica dahurica roots", PHYTOCHEMISTRY, ELSEVIER, AMSTERDAM , NL, vol. 44, no. 5, 1 March 1997 (1997-03-01), pages 887 - 889, XP004292937, ISSN: 0031-9422, DOI: 10.1016/S0031-9422(96)00634-6
- "APPLICATIONS OF BIOTECHNOLOGY TO TRADITIONAL FERMENTED FOODS - Report of an Ad Hoc Panel of the Board on Science and Technology for International Development", 1 January 1992, NATIONAL ACADEMY PRESS, Washington, ISBN: 978-0-309-04685-5, article KEITH H STEINKRAUS: "Lactic Acid Fermentations", pages: 43 - 51, XP055697133

## Description

### TECHNICAL FIELD

The present application relates to a method for producing a meat broth composition and a meat broth composition.

### BACKGROUND ART

Meat broth, which is produced using various base materials of meat (e.g., beef, pork, chicken, etc.), base materials of seafood *(e.g.,* shrimp, squid, octopus, clam meat, *etc.*), and various kinds of condiment vegetables *(e.g.,* onion, garlic, green onion, pepper, etc.) are used as important base materials for cooking in each country of the world including Korean-style, Chinese-style, Japanese-style, and Western-style cuisines. Specifically, examples of the meat broth include a basic meat broth, which is produced using kelp, shiitake mushroom, radish, green onion, and onion as main ingredients; a beef leg bone broth, which is produced using beef leg bones, green onion, and garlic as main ingredients; a beef broth, which is produced using beef brisket, shank, green onion, garlic, pepper corn, rice wine, *etc.;* a chicken broth, which is produced using chicken, chicken bones, onion, carrot, garlic, celery, pepper corn, green onion, *etc.;* a cold noodle meat broth of a beef base, meat broth such as a dongchimi(radish water kimchi) meat broth in which a dongchimi broth and a beef meat broth are mixed; an anchovy meat broth, which is produced using anchovy for a broth, kelp, green onion, *etc.;* a shellfish broth, which is produced using purged short-necked clam, Manila clam, kelp, Cheongyang red pepper, *etc.;* a dried pollack broth, which is produced using dried pollack, anchovy, kelp, green onion, radish, *etc.;* and a seafood meat broth such as a Katsuobushi broth and a fish broth, which is extracted from fish bones and condiment vegetables.

KR Patent Laid-open Publication No. 10-2013-0063657 discloses a preparation method for implementing excellent tastes comparable to home-style or professional store levels by utilizing these meat broths with various flavors in processed foods.

Until now, generally, seasoning base materials in the form of meat, seafood, vegetable extract, or powder, which have been produced in advance, are mixed with purified water and heated to be used in a manufactured product as a base material substitute for meat broth.

### [Patent Document]

(Patent Document 1) KR Patent Laid-open Publication No. 10-2013-0063657 (published on June 17, 2013)
CN105455086 relates to a portable packaged goose soup.
KR20160109476 relates to a method for preparing a broth for an ox head soup.

### DISCLOSURE OF THE INVENTION

### TECHNICAL PROBLEM

To solve the above problems, an object of the present application provides a method for producing a meat broth composition, in which the method includes steps of: primary heating of at least one base material selected from the group consisting of meat and seafood in water at 90-100°C for 3-35 minutes; secondary heating of the base material, which has undergone primary heating, in water at a pressure of 1.2 - 2.7 kgf/cm² and at 105-130°C for 25-100 minutes to elute meat broth from the base material; and heating and sterilizing the meat broth extracted in the secondary heating step at 90-130°C for 10-60 minutes; wherein the method further comprises a step of washing the heated base material with cold water after the primary heating step, wherein the meat broth composition comprises 2-pentyl-furan in an amount of less than 3.0 µg/100 g; 2-heptanal in an amount of less than 1.0 µg/100 g; or 3-octanone in an amount of less than 1.0 µg/100 g.

Additionally, another object of the present application provides meat broth composition for retort, which is produced by a method comprising steps of: primary heating of at least one base material to be used as a base material selected from the group consisting of meat and seafood in water at 90-100°C for 3-35 minutes; secondary heating of the base material, which has undergone primary heating, in water at a pressure of 1.2 - 2.7 kgf/cm² and at 105-130°C for 25-100 minutes to elute meat broth from the base material; and heating and sterilizing the meat broth extracted in the secondary heating step at 90-130°C for 10-60 minutes; wherein the method further comprises a step of washing the heated base material with cold water after the primary heating step, wherein the meat broth composition comprises 2-pentyl-furan in an amount of less than 3.0 µg/100 g; 2-heptanal in an amount of less than 1.0 µg/100 g; or 3-octanone in an amount of less than 1.0 µg/100 g.

### TECHNICAL SOLUTION

To achieve the above objects, an aspect of the present application provides a method for producing a meat broth composition, in which the method includes steps of: primary heating of at least one base material selected from the group consisting of meat and seafood in water at 90-100°C for 3-35 minutes; secondary heating of the base material, which has undergone primary heating, in water at a pressure of 1.2 - 2.7 kgf/cm² and at 105-130°C for 25-100 minutes to elute meat broth from the base material; and heating and sterilizing the meat broth extracted in the secondary heating step at 90-130°C for 10-60 minutes; wherein the method further comprises a step of washing the heated base material with cold water after the primary heating step, wherein the meat broth composition comprises 2-pentyl-furan in an amount of less than 3.0 µg/100 g; 2-heptanal in an amount of less than 1.0 µg/100 g; or 3-octanone in an amount of less than 1.0 µg/100 g.

The base material of the above-described method is characterized in that one or more base material selected from the group consisting of meat and seafood, and in particular, at the time of high-temperature and high-pressure retort sterilization applied for mass production, it is possible to provide meat broth having an excellent sensory quality with reduced browning of the conventional extract or powdered seasoning base material amino acids and saccharides or a subsequent retort odor thereof.

The production method may further include a step of curing original material of the base material with a curing agent so as to reduce the off-flavor of base materials. Specifically, the curing agent may be any one or more among condiments, condiment vegetables, cooking liquor, oil, vinegar, lemon juice, coffee powder, and green tea powder. More specifically, the condiments may be laurel leaves, rosemary, thyme, nutmeg, and pepper, and the condiment vegetables may be ginger, onion, green onion, and celery, but the condiments and the condiment vegetables are not limited thereto. The cooking liquor may be rice wine and wine, and the oil may be olive oil, but the cooking liquor and the oil are not limited thereto. The curing agent may be mixed in an amount of 0.005-2.5 wt% (w/w), specifically 0.01-2.0 wt% (w/w), and more specifically 0.05-1.5 wt% (w/w) relative to the total weight of the original material of the base materials. When the amount is less than the above range, the curing effect is hardly exhibited, whereas when the amount is excessive, the flavor of the base materials may be worsened. To uniformly disperse the curing agent in the base materials, a method of curing the original material of the base materials in a curing agent or a method of tumbling in a vacuum state may be used. The original material of the base materials may be mixed with a curing agent and cured by storing in a refrigerator or placing at room temperature, and specifically, may be cured by placing at 5-25°C for 2-12 hours.

The primary heating step is a step of primary heating of the base materials, and specifically, the primary heating step is performed at 90-100°C for 3-35 minutes, and specifically, heated at 95-100°C for 5-30 minutes. It is difficult to remove off-taste and off-flavor of the base materials outside the above temperature and time range.

After the primary heating step, a step of washing the heated base materials with cold water is further included. Through the step of washing the heated base materials with cold water, blood clots, oil, impurities, etc. generated during the primary heating process can be removed in advance, and thereby a clear meat broth which has no off-flavor such as an unpleasant meat smell, a fishy smell of seafood, etc. and the unique rich taste of the base materials can be retained can be produced.

In the secondary heating step, the base materials which underwent the primary heating are heated at a pressure of 1.2-2.7 kgf/cm² at 105-130°C for 25-100 minutes, and more specifically at a pressure of 1.8-2.1 kgf/cm² at 115-121°C for 30-50 minutes, and thereby meat broth can be produced. Except the above temperature and time ranges, it is not only difficult to elute meat broth from the base materials, but also, as the secondary heating step is performed under high temperature and high pressure conditions within a short period of time within the above temperature and time range, the sensory quality and the amounts of taste-enhancer amino acids can be maintained, and the time required for the heating step can be shortened, thereby improving the productivity. By the heating process of consisting of two steps, an industrial large-scale production method in which amino acids and protein components are enriched and microbial stability is excellent can be provided.

Additionally, in the secondary heating step, a natural antibacterial agent may be further included so as to ensure the microbial safety of the meat broth.

As the natural antibacterial agent, any one having the function of growth inhibition or sterilization of bacteria may be used without limitation, which may be specifically any one or more among an organic acid, an alcohol, a surfactant, a bacteriocin, and a calcium preparation, and a natural antibacterial agent derived from a plant, animal, or microorganism containing the same, or a natural antibacterial agent containing one or more among rice wine, garlic, onion, red pepper, rosemary, oregano, celery, pepper, vinegar, lactic acid, and citric acid. The natural antibacterial agent may be added in an amount of 0.005-2.5 wt% (w/w), and specifically 0.01-2.0 wt% (w/w) relative to the total weight of the base materials. Additionally, an additional base material may be added so as to strengthen the characteristics of the taste of the meat broth.

Additionally, the heated meat broth may be concentrated using a vacuum concentrator after the secondary heating step.

The above sterilization step is a step for heat sterilization of the meat broth extracted in the secondary heating step, and specifically, the heat sterilization is performed at 90-130°C, specifically 100-130°C, more specifically 115-125°C for 10-60 minutes, and more preferably at 115-121°C. In connection with the problem with the meat broth, which is produced according to the retort process under the extreme conditions that had been performed for the purpose of sterilization in the convention method of producing meat broth, in that a retort odor remains in the meat broth, as described hereinbelow, the present application, by applying the above method, can have an effect that the retort odor of meat broth can be reduced even in large-scale production (factory-style production), although the meat broth may undergo retort.

The method for producing meat broth of the present application enables to produce various meat broths according to the base materials, such as meat, seafood, etc. Specifically, examples of meat-based broths include a beef bone meat broth, a beef broth, a chicken broth, a dongchimi meat broth, etc., and examples of seafood broths include an anchovy meat broth, a shellfish broth, a dried pollack broth, a Katsuobushi broth, a fish broth, etc.

The meat broth produced according to the production method of the present application, immediately after the production, may comprise a total number of bacteria of less than 1.0 × 10² CFU/L, a number of heat-resistant bacteria of less than 1.0 × 10² CFU/L, and a number of fungi of less than 1.0 × 10¹ CFU/L, and even after 6 hours at room temperature, contains a total number of bacteria of less than 1.0 × 10² CFU/L, a number of heat-resistant bacteria of less than 1.0 × 10² CFU/L, and a number of fungi of less than 1.0 × 10¹ CFU/L, and thus the microbial stability can be secured.

The meat broth produced according to the production method of the present application can have an excellent sensory quality and an amount of taste-enhancer amino acids compared to the conventional meat broth, in which the meat broth is produced by mixing an extract of meat, seafood, and vegetables or powdered seasoning base materials with purified water followed by heating, which have been produced in advance. Additionally, the meat broth produced according to the production method of the present application can have an improved sensory quality preference and reduced values of 2-pentyl-furan, 2-heptanal, and 3-octanone (i.e., causes of the retort odor) compared to the meat broth produced by the conventional method. In particular, as the meat broth undergoes the curing step and the two-step heating, the degree of improvement in sensory quality and the degree of reduction in retort odor can be more excellent. Specifically, the meat broth of the present application contains 2-pentyl-furan in an amount of less than 3.0 +µg/100 g, specifically less than 1.5 µg/100 g, more specifically equal to or less than 1.0 µg/100 g; contain 2-heptanal in an amount of less than 1.0 µg/100 g, specifically less than 0.75 µg /100 g, more specifically equal to or less than 0.5 +µg/100 g; and contain 3-octanone in an amount of less than 1.0 +µg/100 g, specifically less than 0.85 µg/100 g, and more specifically equal to or less than 0.7 +µg/100 g. More specifically, the meat broth composition may comprise 2-pentyl-furan in an amount of greater than 0 µg/100 g and less than 3.0 µg/100 g; 2-heptanal in an amount of greater than 0 µg/100 g and less than 1.0 µg/100 g; and 3-octanone in an amount of greater than 0 µg/100 g and less than 1.0 µg/100 g.

Additionally, another aspect of the present application provides a meat broth composition for retort, which is produced by a method comprising steps of: primary heating of one or more base material selected from the group consisting of meat and seafood in water at 90-100°C for 3-35 minutes; secondary heating of the base material, which has undergone primary heating, in water at a the pressure of 1.2 - 2.7 kgf/cm² and at 105-230°C for 25-100 minutes to elute meat broth from the base material; and heating and sterilizing the meat broth extracted in the secondary heating step at 90-130°C for 10-60 minutes, wherein the method further comprises a step of washing the heated base material with cold water after the primary heating step, wherein the meat broth composition comprises 2-pentyl-furan in an amount of less than 3.0 +µg/100 g; 2-heptanal in an amount of less than 1.0 µg/100 g; or 3-octanone in an amount of less than 1.0 µg/100 g.

221 The meat broth composition, even if it is produced on a large scale in a large facility (factory scale), has an excellent sensory quality due to the improvement in the amount of eluted taste components (e.g., taste-enhancer amino acids) as well as a reduced retort odor, and also has an effect of maintaining the flavor even when the meat broth undergoes extreme sterilization conditions.

### ADVANTAGEOUS EFFECTS

The method for producing meat broth according to the present application has an effect capable of producing a high-quality meat broth in an industrial scale in which the loss of taste components of base materials can be minimized even after high-pressure high-temperature heat sterilization such as retort, compared to the conventional meat broth or seasoning materials.

### BRIEF DESCRIPTION OF THE DRAWINGS

FIG. 1 is a graph illustrating the amounts of taste-enhancer amino acids of meat broth produced using the original materials or base materials in the form of an extract/powder.
FIG. 2 is a graph illustrating the amounts of taste-enhancer amino acids of meat broth according to the production scale and the presence/absence of retort sterilization.
FIG. 3 is a graph illustrating the amounts of taste-enhancer amino acids according to the conditions of a secondary heating step.
FIG. 4 is a graph illustrating the results of analyzing the amounts of ingredients that induce a retort odor according to a secondary heating step or a curing step.
FIG. 5 is a graph illustrating the sensory quality preference for meat broth produced using the original materials or base materials in the form of an extract/powder.

### MODE FOR CARRYING OUT THE INVENTION

Hereinafter, the present application will be described in more detail to allow for a clearer understanding of the present application. However, the following examples are provided for easier understanding of the present application, and the present application is not limited to the following examples.

### <Examples>

### Preparation Example 1: Preparation of meat broth for large-scale production and preparation of produced foods using the meat broth (not according to the present invention)

In consideration of the deep taste level of the targeted meat broth, livestock meat and poultry *(e.g.,* beef, pork, chicken, *etc.)* as meat in a refrigerated or frozen state; shrimp, squid, surf clam, dried pollack, kelp, etc. as seafood; and garlic, green onion, onion, radish, mushroom, etc. as vegetable base materials were produced alone or by mixing in combination thereof in an amount of 10-50 wt% (w/w), relative to the amount of the meat broth to be produced. In the case of a meat original material, the original material was left in flowing water for 12 hours, bled off, washed, and cut to be produced as a base material.

The meat or seafood original materials as base materials are mixed with a curing agent containing an extract of condiments, cooking liquor, an organic acid, or a mixture thereof in an amount of 0.01-2.0 wt% (w/w) relative to the weight of the original material of the base materials, or the curing agent is produced in a solution state, added to the original material of the base materials, and mixed or immersed.

In a 3,000 L capacity double steam jacketed production tank, 500 kg of a meat original material as a base material mixed and cured with a 50 L curing solution was subjected to primary heating in hot water at 95°C for about 20 minutes, and then blood clots, floating oil, impurities, *etc.* were removed in advance by washing in cold water. The base materials which underwent the primary heating were subjected to secondary heating to prepare meat broth. The specific heating conditions were 85-95°C for 30-180 minutes, and various kinds of non-meat parts *(e.g.,* bones, skins, *etc.)* were added together with condiment vegetables so as to enhance the sensory characteristics of meat broth. During the secondary heating, a natural antibacterial agent was further added in an amount of 0.01-2.0 wt% (w/w) relative to the weight of the base materials so as to secure microbial stability.

After the cooking by the secondary heating, the meat broth was filled into a heat-resistant pouch or tray material of a multilayer packaging material for retort consisting of polypropylene, aluminum, nylon, etc. having resistance to high temperature, light- and oxygen-blocking properties, and flexibility; packaged; sterilized by heating at a temperature of 105-123°C for 10-60 minutes; and prepared into a processed food that can be distributed in a refrigerated state or room temperature.

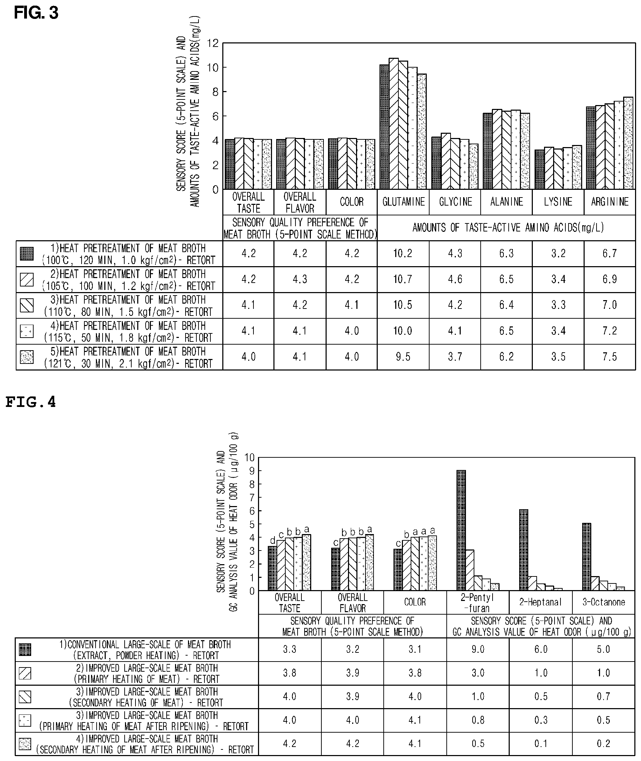

### Experimental Example 1: Evaluation according to heating process. In Experimental Example 1, only the meat broth samples of Table 3, Table 5 and Figure 3, which were produced with a secondary heating step between 105-121°C for 100-30 min and at 1.2-2.1 kgf/cm² are according to the invention. All remaining meat broth samples are not according to the present invention.

### (1) Confirmation of amounts of taste-enhancer amino acids

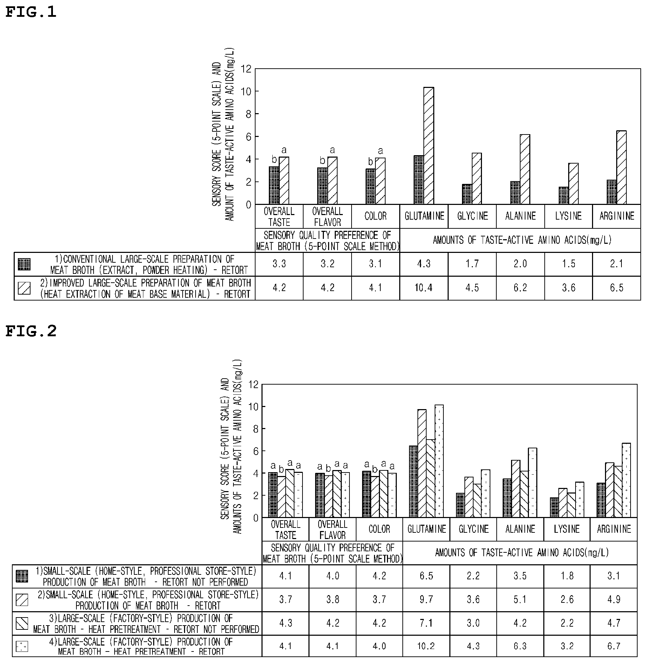

### 1) Confirmation of amounts of taste-enhancer amino acids according to type of base materials (the meat broth samples in Table 1 and Figure 1 are not according to the present invention)

Taste-enhancer amino acids are glutamine, glycine, alanine, lysine, and arginine, which are major taste ingredients that impart a savory taste and a meat flavor of meat broth, and these taste-enhancer amino acids serve as an important control index indicating that the taste quality is improved as the amounts of these taste-enhancer amino acids increase.

The amounts of taste-enhancer amino acids of meat broth produced according to the heating consisting of two steps using the base materials were compared to those of taste-enhancer amino acids of meat broth produced as seasoning materials in the state of an extract or powder applied to the conventional mass production.

Specifically, meat, seafood, vegetable extracts (base materials of ES food, beef, pork, and chicken seasoning concentrates) or seasoning materials in the powder state (base materials of ES food, beef powder, and vegetable seasoning powder) were mixed with purified water, heated at 121°C for 20 minutes by retort sterilization, and the amounts of taste-enhancer amino acids were examined and the results are shown in Table 1 and FIG. 1.

**[Table 1] Amounts of taste-enhancer amino acids according to types of base materials**

| Production Method | Amounts of Taste-Enhancer Amino Acids (mg/L) | | | | |
|---|---|---|---|---|---|
| | Glutamine | Glycine | Alanine | Lysine | Arginine |
| Extract/Pow der Heated Meat Broth | 4.3 | 1.7 | 2.0 | 1.5 | 2.1 |
| Production of Meat Broth of the Present Application (Heat Extraction of Meat Base Materials) | 10.4 | 4.5 | 6.2 | 3.6 | 6.5 |

As confirmed in Table 1 and FIG. 1, it can be confirmed that the meat broth of the present application has about a 3-fold improvement in the amount of taste-enhancer amino acids compared to the conventional meat broth, and thus it can be confirmed that the quality of the meat broth of the present application is improved compared to the conventional meat broth.

### 2) Confirmation of amounts of taste-enhancer amino acids according to production scale (the meat broth samples in Table 2 and Figure 2 are not according to the present invention)

An attempt was made to confirm whether the quality can be maintained when the method for producing the meat broth of the present application is a large-scale production. Specifically, for the method for producing the meat broth of the present application, the conditions as shown in Table 2 (*i.e.*, the factory-style scale is a 3,000 L scale in a double steam jacketed production tank, and the home-style scale is a 10 L scale with heating at 90-100°C for 20-180 minutes) were applied, and the amounts of the taste-enhancer amino acids in the produced meat broth were confirmed. The results are shown in Table 2 and FIG. 2.

**[Table 2] Amounts of taste-enhancer amino acids according to scale of the meat broth of the present application**

| Experimental Group (Based on Beef Meat Broth) | Amounts of Taste-Enhancer Amino Acids (mg/L) | | | | |
|---|---|---|---|---|---|
| | Glutam ine | Glyci ne | Alani ne | Lysin e | Argin ine |
| 1) Home-Style Scale Secondary Heating - Retort Not Performed | 6.5 | 2.2 | 3.5 | 1.8 | 3.1 |
| 2) Home-Style Scale Primary Heating - Retort | 9.7 | 3.6 | 5.1 | 2.6 | 4.9 |
| 3) Factory-Style Scale Meat Broth Production - Secondary Heating - Retort Not Performed | 7.1 | 3.0 | 4.2 | 2.2 | 4.7 |
| 4) Factory-Style Scale Meat Broth Production - Secondary Heating - Retort | 10.2 | 4.3 | 6.3 | 3.2 | 6.7 |

Generally, while the quality of the product decreases as the production scale increases and the production process becomes extreme, as can be confirmed in Table 2 and FIG. 2, it was confirmed that the meat broth of the present application has an effect that the amounts of taste-enhancer amino acids are further increased when the meat broth of the present application is produced on a factory-style scale. In particular, in the factory-style scale, it was confirmed that the amount of taste-enhancer amino acids was highest when the meat broth underwent retort.

### 3) Confirmation of amounts of taste-enhancer amino acids according to conditions of secondary heating step (in Table 3 and Figure 3, only the meat broth samples produced with a secondary heating step between 105-121°C for 100-30 min and at 1.2-2.1 kgf/cm² are according to the invention)

To confirm the presence/absence of changes in quality of meat broth according to conditions of the secondary heating step (*i.e*., temperature, time, and pressure) and optimal conditions, the amounts of taste-enhancer amino acids in the meat broth produced according to the changes in the conditions of the secondary heating step in the process of performing the secondary heating of the base materials which underwent the primary heating step. The results are shown in Table 3 and FIG. 3.

Meat broth samples were produced in the same manner with the only differences in specific conditions of temperature, time, and pressure of the secondary heating step as in Preparation Example 1 and Table 3.

**[Table 3] Amounts of taste-enhancer amino acids according to conditions of secondary heating step**

| Conditions Of Secondary Heating | Amounts of Taste-Enhancer Amino Acids (mg/L) | | | | |
|---|---|---|---|---|---|
| | Glutami ne | Glycine | Alanine | Lysine | Arginine |
| 100°C, 120 Min, 1.0 kgf/cm² | 10.2 | 4.3 | 6.3 | 3.2 | 6.7 |
| 105°C, 100 Min, 1.2 kgf/cm² | 10.7 | 4.6 | 6.5 | 3.4 | 6.9 |
| 110°C, 80 Min, 1.5 kgf/cm² | 10.5 | 4.2 | 6.4 | 3.3 | 7.0 |
| 115°C, 50 Min, 1.8 kgf/cm² | 10.0 | 4.1 | 6.5 | 3.4 | 7.2 |
| 121°C, 30 Min, 2.1 kgf/cm² | 9.5 | 3.7 | 6.2 | 3.5 | 7.5 |

As can be confirmed in Table 3 and FIG. 3, no significant difference was observed in the amounts of taste-enhancer amino acids of meat broth when the conditions of the secondary heating step were 100-121°C, 30-120 minutes at 1.0-2.1 kgf/cm². Therefore, by performing the secondary heating at high-temperature high-pressure for a short period of time (i.e., 121°C, 30 minutes, 2.1 kgf/cm²), the time consumed for the secondary heating step can be reduced to a half (1/2) to one third (1/3) level thereby capable of promoting the improvement of overall productivity.

### (2) Confirmation of effect of reducing retort odor (the meat broth samples in Table 4 and Figure 4 are not according to the present invention)

The effect of reducing the retort odor and the effect of improving sensory evaluation of meat broth, which shows differences according to steps of the present application, were confirmed, compared to the extract/powder heating meat broth. Specifically, the meat broth was produced with the differences in the process of Preparation Example 1 as shown in Table 4 below and used, and for the extract/powder heating meat broth, the meat broth of Experimental Example 4 was used. With regard to the retort odor, 2-pentyl-furan, 2-heptanal, and 3-octanone was measured using the gas chromatograph (GC), and for the sensory evaluation, overall taste, overall flavor, and color were evaluated via a 5-point scale method. The results are shown in Table 4 and FIG. 4.

**[Table 4] Effect of reducing retort odor in meat broth of the present application compared to extract/powder heating meat broth**

| Experimental Group (Based on Beef Meat Broth) | GC Analysis Value of Retort Odor (µg /100 g) | | |
|---|---|---|---|
| | 2-Pentyl-Furan | 2-Heptanal | 3-Octanone |
| Extract, Powder Heating Meat Broth | 9.0 | 6.0 | 5.0 |
| Primary Heating of Meat | 3.0 | 1.0 | 1.0 |
| Secondary Heating of Meat | 1.0 | 0.5 | 0.7 |
| Primary Heating of Meat after Curing | 0.8 | 0.3 | 0.5 |
| Secondary Heating of Meat after Curing | 0.5 | 0.1 | 0.2 |

As confirmed in Table 4 and FIG. 4, it can be confirmed that in the meat broth of the present application, the values of 2-pentyl-furan, 2-heptanal, and 3-octanone, which are the factors of retort odor, are reduced compared to the extract/powder heating meat broth, regardless of the process.

In particular, it can be confirmed that the level of retort odor reduction becomes more excellent as the meat broth of the present application undergoes a curing step and a two-step heating.

### (3) Confirmation of preferences in sensory evaluation

### 1) Confirmation of preferences in sensory evaluation according to the conditions of secondary heating step (in Table 5 and Figure 3, only the meat broth samples produced with a secondary heating step between 105-121°C for 100-30 min and at 1.2-2.1 kgf/cm² are according to the invention)

The sensory quality preferences for the meat broths produced according to the differences in the secondary heating step of Experimental Example 1 (1) 3) were confirmed, and the results are shown in Table 5 and FIG. 3.

**[Table 5]Confirmation of sensory quality preference according to conditions of secondary heating step**

| Heating Conditions (Based on Beef Meat Broth) | Sensory Quality Preference For Meat Broth (5-Point Scale Method) | | |
|---|---|---|---|
| | Overall Taste | Overall Flavor | Color |
| 1) 100°C, 120 Min, 1.0 kgf/cm² | 4.2^{a} | 4.2^{a} | 4.2^{a} |
| 2) 105°C, 100 Min, 1.2 kgf/cm² | 4.2^{a} | 4.3^{a} | 4.2^{a} |
| 3) 110°C, 80 Min, 1.5 kgf/cm² | 4.1^{a} | 4.2^{a} | 4.1^{a} |
| 4) 115°C, 50 Min, 1.8 kgf/cm² | 4.1^{a} | 4.1^{a} | 4.0^{a} |
| 5) 121°C, 30 Min, 2.1 kgf/cm² | 4.0^{a} | 4.1^{a} | 4.0^{a} |

| | | | |
|---|---|---|---|
| * Confirmation of significant differences (P < 0.05), the same English letter indicates no difference. | | | |

As can be confirmed in Table 5 and FIG. 3, even in the sensory quality preference, the presence of a significant difference in the sensory quality preference for meat broth was not confirmed when the conditions of the secondary heating step were 100-121°C, 30-120 minutes, and 1.0-2.1 kgf/cm², similar to the amounts of taste-enhancer amino acids. Therefore, by performing the secondary heating at high-temperature high-pressure for a short period of time (*i.e*., 121°C, 30 minutes, 2.1 kgf/cm²), the time consumed for the secondary heating step can be reduced to a half (1/2) to one third (1/3) level thereby capable of promoting the improvement of overall productivity.

### 2) Confirmation of sensory evaluation preferences between the conventional meat broth and that of the present application (the meat broth samples in Table 6 and Figure 1 are not according to the present invention)

With respect to the conventional meat broth of Experimental Example 1 (1) 1) and that of the present application, the sensory evaluation preferences were confirmed and compared, and the results are shown in Table 6 and FIG. 1.

**[Table 6] Sensory evaluation preferences between the conventional meat broth and that of the present application**

| Production Method | Sensory Quality Preference For Meat Broth (5-Point Scale Method) | | |
|---|---|---|---|
| | Overall Taste | Overall Flavor | Color |
| Extract/Powder Heating Meat Broth | 3.3^{d} | 3.2^{c} | 3.1^{c} |
| Production of the Meat Broth of the Present Application (Meat Base Material Heat Extraction) | 4.2^{a} | 4.2^{a} | 4.1^{a} |

| | | | |
|---|---|---|---|
| * Confirmation of significant differences (P < 0.05), the same English letter indicates no difference. | | | |

As confirmed in Table 6 and FIG. 1, it can be confirmed that the sensory quality preference for the meat broth of the present application was significantly improved compared to that of the conventional meat broth, and thus, it can be confirmed that the quality of the meat broth of the present application is improved compared to the conventional meat broth.

### 3) Confirmation of sensory evaluation preferences for the meat broth of the present application according to production scale (the meat broth samples in Table 7 and Figure 2 are not according to the present invention)

With regard to the production scale of Experimental Example 1 (1) 2), the sensory evaluation preferences were confirmed, and the results are shown in Table 7 and FIG. 2.

**[Table 7] Sensory evaluation of preferences for the meat broth of the present application**

| Experimental Group (Based on Beef Meat Broth) | Sensory Quality Preference For Meat Broth (5-Point Scale Method) | | |
|---|---|---|---|
| | Overall Taste | Overall Flavor | Color |
| Home-Style Scale Secondary Heating - Retort Not Performed | 4.1^{a} | 4.0^{a} | 4.2^{a} |
| Home-Style Scale Primary Heating - Retort | 3.7^{b} | 3.8^{b} | 3.7^{b} |
| Factory-Style Scale Production of Meat Broth - Secondary Heating - Retort Not Performed | 4.3^{a} | 4.2^{a} | 4.2^{a} |
| Factory-Style Scale Production of Meat Broth - Secondary Heating - Retort | 4.1^{a} | 4.1^{a} | 4.0^{a} |

| | | | |
|---|---|---|---|
| * Confirmation of significant differences (P < 0.05), the same English letter indicates no difference. | | | |

Additionally, even in the sensory quality preference of meat broth, as can be confirmed in Table 7 and FIG. 2, it was confirmed that when the production method of the present application was applied, no significant statistical difference in sensory quality preference was observed although the product was produced in a factory-style scale.

### (4) Confirmation of sensory evaluation preferences according to reduction in retort odor (the meat broth samples in Table 8 and Figure 4 are not according to the present invention) 2.

With regard to the reduction in retort odor of Experimental Example 1 (2), the sensory evaluation preferences were confirmed, and the results are shown in Table 8 and FIG. 4.

**[Table 8] Effect of improving sensory evaluation of the meat broth of the present application compared to the extract/powder heating meat broth**

| Experimental Group (Based on Beef Meat Broth) | Sensory Quality Preference For Meat Broth (5-Point Scale Method) | | |
|---|---|---|---|
| | Overall Taste | Overall Flavor | Color |
| Extract/Powder Heating Meat Broth | 3.3^{d} | 3.2^{c} | 3.1^{c} |
| Primary Heating of Meat | 3.8^{c} | 3.9^{b} | 3.8^{b} |
| Secondary Heating of Meat | 4.0^{b} | 3.9^{b} | 4.0^{a} |
| Primary Heating of Meat After Curing | 4.0^{b} | 4.0^{b} | 4.1^{a} |
| Secondary Heating of Meat After Curing | 4.2^{a} | 4.2^{a} | 4.1^{a} |

| | | | |
|---|---|---|---|
| * Confirmation of significant differences (P < 0.05), the same English letter indicates no difference. | | | |

As confirmed in Table 8 and FIG. 4, it can be confirmed that, compared to the extract/powder heating meat broth, the meat broth of the present application has improved sensory quality preference regardless of the production process, and in particular, the improvement in sensory quality preference becomes more excellent as the meat broth undergoes a curing step and a two-step heating.

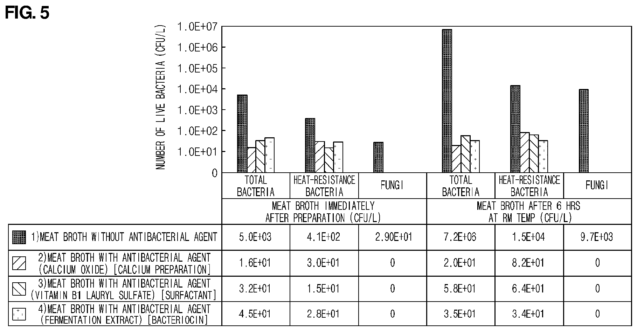

### Experimental Example 2: Confirmation of microbial stability of meat broth according to natural antibacterial agents (the meat broth samples in Table 9 and Figure 5 are not according to the present invention)

In the secondary heating step, the microbial stability according to the addition of a natural antibacterial agent was confirmed. Specifically, the total number of bacteria, the number of heat-resistance bacteria, and the number of fungi of the meat broth were confirmed immediately after the production and after 6 hours at room temperature, in which the meat broth was produced in the same manner as in Preparation Example 1 except the differences in the presence/absence of a natural antibacterial agent and the kind thereof as conditions shown in Table 3 at the time of the secondary heating. The results are shown in Table 9 and FIG. 5.

**[Table 9] Confirmation of effect of microbial stability of meat broth according to natural antibacterial agents**

| Experimental Group (Based on Beef Meat Broth) | Meat Broth Immediately After Production (CFU/L) | | | Meat Broth After 6 Hours At Room Temperature | | |
|---|---|---|---|---|---|---|
| | Total Bacter ia | Heat-Resist ant Bacter ia | Fungi | Total Bacte ria | Heat-Resist ant Bacter ia | Fungi |
| 1) Meat Broth with No Addition of Antibacterial Agent | 5.0E + 03 | 4.1E + 02 | 2.9E + 01 | 7.2E + 06 | 1.5E + 04 | 9.7E + 03 |
| 2) Meat Broth with Addition of Antibacterial Agent (Calcium Oxide) [Calcium Preparation] | 1.6E + 01 | 3.0E + 01 | 0 | 2.0E + 01 | 8.2E + 01 | 0 |
| 3) Meat Broth with Addition of Antibacterial Agent (Vitamin B1 Lauryl Sulfate) [Surfactant] | 3.2E + 01 | 1.5E + 01 | 0 | 5.8E + 01 | 6.4E + 01 | 0 |
| 4) Meat Broth with Addition of Antibacterial Agent (Fermentation Extract) [Bacteriocin] | 4.5E + 01 | 2.8E + 01 | 0 | 3.5E + 01 | 3.4E + 01 | 0 |

As can be confirmed in Table 9 and FIG. 5, the meat broth in which a natural antibacterial agents (calcium, a surfactant, and a fermentation extract) were added showed an overall decrease in the total number of bacteria, the number of heat-resistance bacteria, and the number of fungi compared to the meat broth in which the natural antibacterial agents (calcium, a surfactant, and a fermentation extract) were added. Specifically, the total number of bacteria was decreased to a level of 10² CFU/L, and the number of heat-resistance bacteria and the number of fungi were decreased to a level of 10¹ CFU/L, and in particular, the number of fungi was decreased to a level of sterilization thus confirming microbial stability.

Additionally, it was confirmed that even after 6 hours at room temperature, the meat broth in which no natural antibacterial agent was not added showed an increase in all of the total number of bacteria, the number of heat-resistance bacteria, and the number of fungi, compared to the meat broth immediately after the production, thus showing low microbial stability. In contrast, in the meat broth in which natural antibacterial agents were added, all of the total number of bacteria, the number of heat-resistance bacteria, and the number of fungi showed only an increase of less than 10¹ compared to the meat broth immediately after the production, thus showing high microbial stability.

### Experimental Example 3: Quality evaluation of meat broth of the present application and products containing meat broth of the present application (the meat broth samples in Table 10 and the products in table 11 are not according to the present invention)

The meat broth of the present application and the products containing the meat broth of the present application were subjected to sensory evaluation (5-point scale method) with regard to overall taste, savory taste, and physical appearance, and the results are shown in Tables 10 and 11. Specifically, the quality of the meat broth of the present application produced by the method of Preparation Example 1 was compared to that of the conventional meat broth. Specifically, for the conventional meat broth, the meat broth was produced using an extract and purified water, or using an extract by adding extract (base materials of ES food, beef, pork, chicken seasoning extract, etc.) or seasoning powder (base materials of ES food, beef seasoning powder, chicken seasoning powder, etc.) in an amount of 1-10 wt% (w/w) relative to the weight of purified water, and heating at 90-100°C for about 5-20 minutes, and the meat broth of the present application was produced by the production method of Preparation Example 1.

**[Table 10] Results of quality evaluation of the present application meat broth**

| Base Materials of Meat Broth | Overall Taste (5-Point Scale Method) | Savory Taste of Meat Broth | Physical Appearance (Color) |
|---|---|---|---|
| Extract (Beef Ribs, Brisket), Purified Water | 3.5^{a} | 3.6^{a} | 3.5^{a} |
| Ribs, Condiment Vegetables Heat Extraction | 3.9^{b} | 3.9^{b} | 3.9^{b} |
| Extract (Chicken Meat, Chicken Feet) | 3.6^{a} | 3.7^{a} | 3.6^{a} |
| Chicken Meat, Chicken Bones, Condiment Vegetables | 3.9^{b} | 3.9^{b} | 3.9^{b} |
| Extract (Anchovy, Kelp) | 3.7^{a} | 3.5^{a} | 3.6^{a} |
| Anchovy, Kelp, Condiment Vegetables | 3.9^{b} | 3.8^{b} | 3.9^{b} |

| | | | |
|---|---|---|---|
| * Confirmation of significant differences (P < 0.05), the same English letter indicates no difference. | | | |

As shown in Table 10, it was confirmed that the meat broth of the present application was improved in all of the evaluation items compared to the conventional meat broth to have statistical significance (p < 0.05).

**[Table 11] Results of quality evaluation of products containing the meat broth of the present application**

| Soup, Broth Kinds (Applicati on of Meat Broth) | Base Materials of Meat Broth | Overall Taste (5-Point Scale Method) | Savory Taste of Meat Broth | Physical Appeara nce (Color) |
|---|---|---|---|---|
| Rib Broth (Rib Meat Broth) | Extract (Beef Ribs, Brisket), Purified Water | 3.6^{a} | 3.6^{a} | 3.5^{a} |
| | Ribs, Condiment Vegetables Heat Extraction | 3.9^{b} | 4.0^{b} | 3.9^{b} |
| Boiled Chicken Soup (Chicken Meat Broth) | Extract (Chicken Meat, Chicken Feet) | 3.6^{a} | 3.6^{a} | 3.5^{a} |
| | Chicken Meat, Chicken Bones, Condiment Vegetables | 3.9^{b} | 3.9^{b} | 3.9^{b} |
| Seaweed Soup (Anchovy Kelp Meat Broth) | Extract (Anchovy, Kelp) | 3.7^{a} | 3.6^{a} | 3.6^{a} |
| | Anchovy, Kelp, Condiment Vegetables | 3.9^{b} | 3.9^{b} | 3.9^{b} |

| | | | | |
|---|---|---|---|---|
| * Confirmation of significant differences (P < 0.05), the same English letter indicates no difference. | | | | |

As shown in Table 11, it was confirmed that the products containing the meat broth of the present application showed high scores in the overall taste, savory taste, and physical appearance considering colors compared to the products containing the extract/powder heating meat broth by 0.2-0.4 points per item.

From the above results, it was confirmed that when the heat extraction method of meat broth production using various meat and seafood and vegetable base materials was applied to the production of various produced foods with cooking convenience (e.g., soup, broth, stew, side dishes, main dishes, etc.), an effect of significantly improving sensory quality during high-temperature high-pressure heat sterilization (in particular, retort) was shown, thus confirming that the novel method for producing meat broth established through the present application is an effective technology that can be utilized in the future in the development of foods to be refrigerated and processed at room temperature.

## Claims

1. A method for producing a meat broth composition, the method comprising steps of:
primary heating of one or more base material selected from the group consisting of meat and seafood in water at 90-100°C for 3-35 minutes;
secondary heating of the base material, which has undergone primary heating, in water at a pressure of 1.2 - 2.7 kgf/cm² and at 105-130°C for 25-100 minutes to elute meat broth from the base material; and
heating and sterilizing the meat broth extracted in the secondary heating step at 90-130°C for 10-60 minutes,
wherein the method further comprises a step of washing the heated base material with cold water after the primary heating step,
wherein the meat broth composition comprises 2-pentyl-furan in an amount of less than 3.0 µg/100 g; 2-heptanal in an amount of less than 1.0 µg/100 g; or 3-octanone in an amount of less than 1.0 p.g/100 g.

2. The method of claim 1, wherein the method further comprises a step of curing an original material of the base material with a curing agent comprising at least one selected among condiments, condiment vegetables, cooking liquor, oils, vinegars, lemon juice, coffee powder, and green tea powder.

3. The method of claim 1, wherein, in the secondary heating step, a natural antibacterial agent comprising one or more selected from the group consisting of organic acids, alcohols, surfactants, bacteriocins, and calcium preparations is further added.

4. The method of claim 3, wherein, in the secondary heating step, a natural antibacterial agent is added in an amount of 0.005-2.5 wt% (w/w) relative to the total weight of the base material.

5. The method of claim 1, wherein the sterilizing step is performed at 115-125°C.

6. The method of claim 1, wherein the produced meat broth composition, immediately after the production, comprises a total number of bacteria of less than 1.0 × 10² CFU/L, a number of heat-resistant bacteria of less than 1.0 × 10² CFU/L, and a number of fungi of less than 1.0 × 10¹ CFU/L.

7. The method of claim 1, wherein the meat broth composition comprises 2-pentyl-furan in an amount of greater than 0 µg/1 00 g and less than 3.0 µg/100 g; 2-heptanal in an amount of greater than 0 µg/100 g and less than 1.0 µg/100 g; and 3-octanone in an amount of greater than 0 µg/100 g and less than 1.0 µg/100 g.

8. A meat broth composition for retort, which is produced by a method comprising steps of:
primary heating of one or more base material selected from the group consisting of meat and seafood in water at 90-100°C for 3-35 minutes;
secondary heating of the base material, which has undergone primary heating, in water at a the pressure of 1.2 - 2.7 kgf/cm² and at 105-130°C for 25-100 minutes to elute meat broth from the base material; and
heating and sterilizing the meat broth extracted in the secondary heating step at 90-130°C for 10-60 minutes,
wherein the method further comprises a step of washing the heated base material with cold water after the primary heating step,
wherein the meat broth composition comprises 2-pentyl-furan in an amount of less than 3.0 µg/100 g; 2-heptanal in an amount of less than 1.0 µg/100 g; or 3-octanone in an amount of less than 1.0 µg/100 g.

## Patentansprüche

1. Verfahren zur Herstellung einer Fleischbrühezusammensetzung, wobei das Verfahren die folgenden Schritte umfasst:
primäres Erhitzen von einem oder mehreren aus der Gruppe bestehend aus Fleisch und Meeresfrüchten ausgewählten Grundmaterialien in Wasser bei 90 - 100 °C für 3 - 35 Minuten;
sekundäres Erhitzen des Grundmaterials, das primärem Erhitzen unterzogen wurde, in Wasser bei einem Druck von 1,2 - 2,7 kgf/cm² und bei 105 - 130 °C für 25 - 100 Minuten zum Eluieren von Fleischbrühe aus dem Ausgangsmaterial; und
Erhitzen und Sterilisieren der im Schritt des sekundären Erhitzens gewonnenen Fleischbrühe bei 90 - 130 °C für 10 - 60 Minuten,
wobei das Verfahren ferner einen Schritt des Waschens des erhitzten Grundmaterials mit kaltem Wasser nach dem Schritt des primären Erhitzens umfasst,
wobei die Fleischbrühezusammensetzung 2-Pentylfuran in einer Menge von weniger als 3,0 µg/100 g; 2-Heptanal in einer Menge von weniger als 1,0 µg/100 g; oder 3-Octanon in einer Menge von weniger als 1,0 µg/100 g umfasst.

2. Verfahren nach Anspruch 1, wobei das Verfahren ferner einen Schritt des Pökelns eines Ausgangsmaterials des Grundmaterials mit einem Pökelststoff umfasst, der mindestens ein aus folgenden Ausgewähltes umfasst: Gewürze, Würzgemüse, Kochsud, Öle, Essige, Zitronensaft, Kaffeepulver und Grünteepulver.

3. Verfahren nach Anspruch 1, wobei im Schritt des sekundären Erhitzens ferner ein natürlicher antibakterieller Wirkstoff, der eines oder mehrere aus der Gruppe bestehend aus organischen Säuren, Alkoholen, Tensiden, Bacteriocinen und Calciumpräparaten umfasst, zugesetzt wird.

4. Verfahren nach Anspruch 3, wobei in dem sekundären Erhitzungsschritt ein natürlicher antibakterieller Stoff in einer Menge von 0,005 - 2,5 Gew.-% (w/w), bezogen auf das Gesamtgewicht des Grundmaterials, zugesetzt wird.

5. Verfahren nach Anspruch 1, wobei der Schritt des Sterilisierens bei 115 - 125 °C durchgeführt wird.

6. Verfahren nach Anspruch 1, wobei die hergestellte Fleischbrühezusammensetzung unmittelbar nach der Herstellung eine Gesamtzahl von Bakterien von weniger als 1,0 x 10² KBE/I, eine Anzahl von hitzebeständigen Bakterien von weniger als 1,0 × 10² KBE/I und eine Anzahl von Pilzen von weniger als 1,0 × 10¹ KBE/I umfasst.

7. Verfahren nach Anspruch 1, wobei die Fleischbrühezusammensetzung 2-Pentylfuran in einer Menge von mehr als 0 µg/100 g und weniger als 3,0 µg/100 g; 2-Heptanal in einer Menge von mehr als 0 µg/100 g und weniger als 1,0 µg/100 g; und 3-Octanon in einer Menge von mehr als 0 µg/100 g und weniger als 1,0 µg/100 g umfasst.

8. Fleischbrühezusammensetzung für die Retorte, die durch ein Verfahren hergestellt wird, das die folgenden Schritte umfasst:
primäres Erhitzen von einem oder mehreren aus der Gruppe bestehend aus Fleisch und Meeresfrüchten ausgewählten Grundmaterialien in Wasser bei 90 - 100 °C für 3 - 35 Minuten;
sekundäres Erhitzen des Grundmaterials, das primärem Erhitzen unterzogen wurde, in Wasser bei einem Druck von 1,2 - 2,7 kgf/cm² und bei 105 - 130 °C für 25 - 100 Minuten zum Eluieren von Fleischbrühe aus dem Ausgangsmaterial; und
Erhitzen und Sterilisieren der im Schritt des sekundären Erhitzens gewonnenen Fleischbrühe bei 90 - 130 °C für 10 - 60 Minuten,
wobei das Verfahren ferner einen Schritt des Waschens des erhitzten Grundmaterials mit kaltem Wasser nach dem Schritt des primären Erhitzens umfasst,
wobei die Fleischbrühezusammensetzung 2-Pentylfuran in einer Menge von weniger als 3,0 µg/100 g; 2-Heptanal in einer Menge von weniger als 1,0 µg/100 g; oder 3-Octanon in einer Menge von weniger als 1,0 µg/100 g umfasst.

## Revendications

1. Procédé de production d'une composition de bouillon de viande, le procédé comprenant les étapes consistant en :
chauffage primaire d'une ou de plusieurs matières de base sélectionnées parmi le groupe composé de viande et de fruits de mer dans de l'eau à 90-100 °C pendant 3-35 minutes ;
chauffage secondaire de la matière de base, qui a été soumise à un chauffage primaire, dans de l'eau à une pression de 1,2-2,7 kgf/cm² et à 105-130 °C pendant 25-100 minutes pour éluer le bouillon de viande de la matière de base ; et
chauffant et stérilisant le bouillon de viande extrait dans l'étape de chauffage secondaire à 90-130 °C pendant 10-60 minutes,
où le procédé comprend en outre une étape de lavage de la matière de base chauffée dans de l'eau froide après l'étape de chauffage primaire,
dans lequel la composition de bouillon de viande comprend du 2-pentyl-furane en une quantité de moins de 3,0 µg/100 g ; du 2-heptanal en une quantité de moins de 1,0 µg/100 g ; ou de la 3-octanone en une quantité de moins de 1,0 µg/100 g.

2. Procédé selon la revendication 1, où le procédé comprend en outre une étape de conservation d'une matière originale de la matière de base avec un agent de conservation comprenant au moins l'un sélectionné parmi des condiments, légumes en condiments, liqueur de cuisine, huiles, vinaigres, jus de citron, café en poudre et thé vert en poudre.

3. Procédé selon la revendication 1, dans lequel, à l'étape de chauffage secondaire, un agent antibactérien naturel comprenant l'un ou plusieurs sélectionnés parmi le groupe composé d'acides organiques, alcools, tensioactifs, bactériocines et préparations de calcium sont ajoutés en plus.

4. Procédé selon la revendication 3, dans lequel, à l'étape de chauffage secondaire, un agent antibactérien naturel est ajouté en une quantité de 0,005-2,5 % en poids (p/p) par rapport au poids total de la matière de base.

5. Procédé selon la revendication 1, dans lequel l'étape de stérilisation est effectuée à 115-125 °C.

6. Procédé selon la revendication 1, dans lequel la composition de bouillon de viande produite, immédiatement après la production, comprend un nombre total de bactéries de moins de 1,0 × 10² UFC/I, un nombre de bactéries résistantes à la chaleur de moins de 1,0 × 10² UFC/I, et un nombre de champignons de moins de 1,0 × 10¹ UFC/I.

7. Procédé selon la revendication 1, dans lequel la composition de bouillon de viande comprend du 2-pentyl-furane en une quantité de plus de 0 µg/100 g et de moins de 3,0 µg/100 g ; du 2-heptanal en une quantité de plus de 0 µg/100 g et de moins de 1,0 µg/100 g ; et de la 3-octanone en une quantité de plus de 0 µg/100 g et de moins de 1,0 µg/100 g.

8. Composition de bouillon de viande pour autoclave, qui est produite par un procédé comprenant les étapes consistant en :
chauffage primaire d'une ou de plusieurs matières de base sélectionnées parmi le groupe composé de viande et de fruits de mer dans de l'eau à 90-100 °C pendant 3-35 minutes ;
chauffage secondaire de la matière de base, qui a été soumise à un chauffage primaire, dans de l'eau à une pression de 1,2-2,7 kgf/cm² et à 105-130 °C pendant 25-100 minutes pour éluer le bouillon de viande de la matière de base ; et
chauffant et stérilisant le bouillon de viande extrait dans l'étape de chauffage secondaire à 90-130 °C pendant 10-60 minutes,
où le procédé comprend en outre une étape de lavage de la matière de base chauffée dans de l'eau froide après l'étape de chauffage primaire,
dans lequel la composition de bouillon de viande comprend du 2-pentyl-furane en une quantité de moins de 3,0 µg/100 g ; du 2-heptanal en une quantité de moins de 1,0 µg/100 g ; ou de la 3-octanone en une quantité de moins de 1,0 µg/100 g.
